# EUROPÄISCHE PATENTSCHRIFT

(11) **EP 0 656 924 B1**
(45) Veröffentlichungstag und Bekanntmachung des Hinweises auf die Patenterteilung: **17.09.1997**
(21) Anmeldenummer: 94918368.5
(22) Anmeldetag: 25.05.1994
(51) Int. Cl.: C09D 133/14, C09D 131/02, C09D 163/00, B05D 1/36, B05D 7/14

(54) **VERFAHREN ZUR MEHRSCHICHTLACKIERUNG VON SUBSTRATEN**
PROCESS FOR APPLYING MULTIPLE LAYERS OF LACQUER ON A SUBSTRATE
PROCEDE D'APPLICATION DE PLUSIEURS COUCHES DE LAQUE SUR UN SUBSTRAT

(30) Priorität: 28.05.1993 DE 4317861
(43) Veröffentlichungstag der Anmeldung: 14.06.1995
(73) Patentinhaber: Herberts Gesellschaft mit beschränkter Haftung, 42285 Wuppertal (DE)
(72) Erfinder: BROCK, Thomas, D-50354 Hürth (DE); WILCZEK, Erwin, D-50937 Köln (DE)
(74) Vertreter: Türk, Gille, Hrabal, Leifert
(86) Internationale Anmeldenummer: EP9401675
(87) Internationale Veröffentlichungsnummer: WO9428076

(56) Entgegenhaltungen:
- EP-A- 0 320 719
- EP-A- 0 439 021
- WO-A-92/02590
- US-A- 5 322 897

## Beschreibung

Die Erfindung betrifft ein Verfahren zur Mehrschichtlackierung von Substraten, das insbesondere in der Industrie- und Kraftfahrzeuglackierung, bevorzugt in der Kraftfahrzeugreparaturlackierung eingesetzt werden kann.

In der DE-A-41 15 015 und der DE-A-41 15 042 werden physikalisch trocknende Überzugsmittel auf wäßriger Basis, insbesondere für die Herstellung von Metallic-Überzügen und für die Herstellung von unifarbenen Überzügen, beschrieben. Die Metallic-Lacke enthalten mindestens ein Bindemittel, basierend auf Carbonatgruppierungen enthaltenden Polyurethanen mit einem zahlenmittleren Molekulargewicht (Mn) von 70000 - 500000 und weiteren Polyurethanen mit einem Mn 20000 - 60000. Zur Herstellung der unifarbenen Überzüge werden Bindemittelmischungen auf Basis Carbonatgruppierungen enthaltender Polyurethane mit einer Glasübergangstemperatur (Tg) kleiner 0°C und ungesättigter Reaktionsprodukte von carboxyfunktionellen Polykondensaten mit ethylenisch ungesättigten Monomeren mit einer Glasübergangstemperatur größer 0°C eingesetzt.

Derartige physikalisch trocknende Überzugsmittel sind auf Grund ihrer Fähigkeit, bei Raumtemperatur bzw. bei geringfügigem Erwärmen, beispielsweise auf bis zu 60°C, auszuhärten, besonders für Reparaturlackierungen von Kraftfahrzeugen geeignet. Sie können nach der Applikation mit transparenten Decklacken beschichtet werden. Die Beschichtung kann naß-in-naß nach kurzem Ablüften oder nach Trocknen der Basislackschicht erfolgen. Als Klarlack kommen übliche transparente Lacke aus dem Kraftfahrzeugsektor zur Anwendung. Hierbei handelt es sich insbesondere um Zweikomponentenlacke auf Acrylat/Isocyanat-Basis in konventionellen Formulierungen.

Es hat sich jedoch gezeigt, daß in einem derartigen Mehrschichtaufbau nach dem Überlackieren mit Klarlack eine ungenügende Härte der Basislackschicht und damit der gesamten Decklackschicht resultiert. Besonders bei höheren Schichtdicken (ca. 40 µm) bleibt der Basislack zu weich. Auch der erzielte Glanz und die Wasserbeständigkeit bleiben unbefriedigend.

In der DE-A-37 31 652 wird ein konventioneller Zweikomponenten (2K)-Klarlack auf Basis eines hydroxyl-, carboxy- und aminogruppenhaltigen Acrylatharzes und Polyisocyanatvernetzer beschrieben, welcher insbesondere zur Applikation auf Metallicbasislack geeignet sein soll. Das Acrylatharz wird erhalten durch Copolymerisation von Hydroxyalkylestern, alpha, beta-ungesättigter Carbonsäuren mit ethylenisch ungesättigten Carbonsäuren und weiteren olefinisch ungesättigten Monomeren. Das hierbei erhaltene Copolymerisat wird weiter umgesetzt mit Verbindungen, die pro Molekül eine freie Isocyanatgruppe und mindestens eine tert. Aminogruppe enthalten. Vernetzt wird mit einem NCO : OH-Verhältnis von 0,3 : 1 bis 3,5 : 1. Auch mit diesen Klarlacken werden im Mehrschichtaufbau nur ungenügende Härten erzielt.

Aufgabe der vorliegenden Erfindung ist es daher, Überzugsmittel bereitzustellen, die zu Überzügen mit hohem Glanz, hoher Härte und guter Wetterbeständigkeit führen und die diese Eigenschaften insbesondere bei der Verwendung als Klarlacke zur Überlackierung an sich bekannter Wasserbasislacke (uni und metallic) beibehalten.

Diese Aufgabe wird gelöst durch ein Verfahren zur Mehrschichtlackierung eines Substrats, durch Aufbringen einer Basislackschicht aus einem wäßrigen Überzugsmittel auf das gegebenenfalls vorbeschichtete Substrat und Auftrag eines Klarlacks, das dadurch gekennzeichnet ist, daß man einen Klarlack verwendet, der enthält
A) mindestens ein hydroxylgruppenhaltiges Copolymerisat, das erhältlich ist durch Umsetzung von
   a) einem oder mehreren Estern von in alpha-Stellung verzweigten aliphatischen gesättigten Monocarbonsäuren mit einer oder mehreren Epoxidgruppen oder ethylenischen Doppelbindungen im Alkoholteil,
   b) einem oder mehreren Alkylestern alpha,beta-ethylenisch ungesättigter Carbonsäuren, und
   c) einem oder mehreren Hydroxyalkylestern alpha,beta-ethylenisch ungesättigter Carbonsäuren,
B) ein oder mehrere Polyisocyanate mit im Durchschnitt mindestens 1,5 NCO-Gruppen im Molekül in einer solchen Menge, daß das Äquivalentverhältnis der OH-Gruppen der Komponente A) zu NCO-Gruppen der Komponente B) 1 : 1,6 bis 1 : 2,2 beträgt und
C) ein oder mehrere Lösemittel, sowie gegebenenfalls ein oder mehrere lackübliche Additive.

Gemäß einer bevorzugten Ausführungsform kann die Komponente A) auch gegebenenfalls unter Mitverwendung von einer oder mehreren alpha, betaethylenisch ungesättigten Carbonsäuren als Komponente d) und/oder gegebenenfalls unter Mitverwendung von einem oder mehreren von a), b), c) und d) verschiedenen Vinylmonomeren als Komponente e) hergestellt werden. Weitere bevorzugte Ausführungsformen sind in den abhängigen Ansprüchen bescrieben.

Es wurde gefunden, daß bei Applikation des erfindungsgemäßen Überzugsmittels in transparenter Form auf einen Wasserbasislack auf vorzugsweise Polyurethanharzbasis sehr gute Härte, insbesondere bei hohen Schichtdicken, sowie verbesserter Glanz erzielt werden. Überraschenderweise ist dabei selbst bei Übervernetzung mit Isocyanat keine Verschlechterung der Wetterstabilität (Wasserfestigkeit, Glanzhaltung) zu verzeichnen. Oftmals wird bei bekannten polyisocyanatvernetzenden Acrylatharzen schon bei einer geringen Übervernetzung eine Verschlechterung der Wetterbeständigkeit beobachtet.

Zur Herstellung des hydroxylgruppenhaltigen Copolymerisats werden als Komponente a) Ester von in alpha-Stellung verzweigten aliphatischen gesättigten Monocarbonsäuren mit 5 - 20 C-Atomen, besonders bevorzugt mit 9 - 11 C-Atomen, eingesetzt. Es kann sich z.B. um Monocarbonsäuren handeln, bei denen die Carboxylgruppe an ein tertiäres oder quartäres C-Atom gebunden ist. Die gesättigten verzweigten aliphatischen Monocarbonsäuren sind bekannte Stoffe, die nach bekannten Verfahren hergestellt werden können, z.B. durch Umsetzen von Ameisensäure oder Kohlenmonoxid und Wasser mit Olefinen in Anwesenheit flüssiger saurer Katalysatoren, wie Schwefelsäure, Phosphorsäure, Bortrifluorid. Nach diesem Verfahren erhält man meistens Mischungen von gesättigten, in der alpha-Stellung verzweigten aliphatischen Monocarbonsäuren, die zum größten Teil aus Säuren bestehen, in denen die Carboxylgruppe an ein quarternäres C-Atom gebunden ist. Die Olefine können beispielsweise Crackprodukte von paraffinischen Kohlenwasserstoffen, wie Mineralölfraktionen sein und können sowohl verzweigte wie geradkettige acyclische und/oder cycloaliphatische Olefine enthalten. Andere olefinische Ausgangsstoffe sind z.B. Diisobutylen, Propylentrimer.

Die den Estern formal zugrundeliegende Alkoholkomponente weist eine oder mehrere Epoxidgruppen oder ethylenische Doppelbindungen auf. Bei den Epoxidgruppen enthaltenden Estern (Komponente a1) kann es sich z.B. um Glycidylester handeln. Bei den ethylenische Doppelbindungen enthaltenden Estern (Komponente a2) kann es sich z.B. um Vinylester handeln.

Die Vinylester können auf an sich bekannte Weise aus den vorstehend beschriebenen Säuren hergestellt werden, z.B. indem man die Säuren mit Acetylen reagieren läßt. Die Vinylester von gesättigten aliphatischen Monocarbonsäuren mit 9 - 11 C-Atomen je Molekül haben den Vorteil, daß ihr Siedepunkt so hoch ist, daß man bei der Umsetzung kein Druckgefäß benötigt.

Die Glycidylester können z.B. durch Umsetzung der entsprechenden Säure mit Epichlorhydrin in üblicher Weise hergestellt werden. Derartige Vinyl- und Glycidylester sind kommerziell erhältlich, z.B. als VeoVa 9, VeoVa 10, Cardura E (eingetragenes Warenzeichen).

Als Komponente b) werden Alkylester von alpha,beta-ungesättigten Monocarbonsäuren, wie z.B. Ester der Acrylsäure, Methacrylsäure, Itaconsäure, Crotonsäure mit gerad- und verzweigtkettigen Alkoholen sowie deren Mischungen bevorzugt eingesetzt. Bevorzugt sind Acryl- und/oder Methacrylsäureester mit 2 - 8 C-Atomen, wiederum bevorzugt mit 3 - 5 C-Atomen, im Alkylrest. Beispiele hierfür sind Ethyl(meth)acrylat, Propyl(meth)acrylat, Isopropyl (meth)-acrylat, Butyl(meth)acrylat, Isobutyl(meth)acrylat, Pentyl(meth)acrylat, Isopenthyl(meth)acrylat, Hexyl(meth)acrylat, Ethylhexyl(meth)acrylat. Der Ausdruck (meth)acryl bedeutet hier und im Folgenden acryl und/oder methacryl.

Als Komponente c) kommen insbesondere Hydroxyalkylester alpha, beta-ungesättigter Carbonsäuren mit primären oder sekundären Hydroxylgruppen in Frage. Bevorzugt werden Hydroxyalkylester der Methacrylsäure und/oder Acrylsäure eingesetzt. Besonders bevorzugt sind Hydroxyalkylester der Acryl- und/oder Methacrylsäure mit 2 - 8 C-Atomen im Hydroxyalkylrest. Beispiele hierfür sind 2-Hydroxyethyl(meth)acrylat, 2-Hydroxypropyl(meth)-acrylat, Hydroxybutyl(meth)acrylat, 3-Hydroxybutyl(meth)acrylat, Hydroxyhexyl (meth)acrylat, Hydroxyoctyl(meth)acrylat.

Gegebenenfalls können noch ethylenisch ungesättigte, bevorzugt alpha, beta ethylenisch ungesättigte Carbonsäuren (Komponente d) zugegeben werden. Beispiele hierfür sind Monocarbonsäuren wie Acrylsäure, Methacrylsäure, aber auch zwei- oder mehrwertige Carbonsäuren, wie z.B. Maleinsäure, Fumarsäure, Itaconsäure. Bevorzugt sind Carbonsäuren mit 3 - 5 C-Atomen im Molekül. Besonders bevorzugt sind Acrylsäure und Methacrylsäure.

Gegebenenfalls können auch weitere, von den Komponenten a) bis d) verschiedene Vinylmonomere als Komponente e) eingesetzt werden. Bevorzugt handelt es sich hierbei um monovinylaromatische Verbindungen mit 8 - 9 C-Atomen im Molekül, wie Styrol, Vinyltoluol, alkylsubstituerte Styrole, besonders bevorzugt um Styrol. Jedoch auch andere Vinylmonomere, wie zum Beispiel Vinylacetat, können Verwendung finden.

Die Herstellung der hydroxylgruppenhaltigen Copolymerisate kann durch Polymerisation nach üblichen Verfahren, z.B. der Substanz- oder Lösungspolymerisation durchgeführt werden. Die Polymerisationsverfahren sind gut bekannt und beispielsweise beschrieben in Houben-Weyl, Methoden der organischen Chemie, 4. Auflage, Band 14/1, S. 24 - 255 (1961). Das Lösungspolymerisationsverfahren wird für die Herstellung des hydroxylgruppenhaltigen Copolymerisates bevorzugt. Bei diesem Verfahren werden beispielsweise die Lösemittel und Komponente a) in das Reaktionsgefäß vorgelegt, unter Rühren auf Siedetemperatur geheizt und das Gemisch aus Monomeren und Initiator kontinuierlich in einer bestimmten Zeit zudosiert. Die Polymerisation wird z.B. bei erhöhten Temperaturen, z.B. von 100 bis 160°C, vorzugsweise bei 130 - 150°C durchgeführt.

Die Polymerisationsreaktion wird mit Polymerisationsinitiatoren gestartet. Geeignete sind übliche Initiatoren, die in einer Reaktion 1. Ordnung thermisch in Radikale zerfallen, z.B. Peroxide. Initiatorart und -menge werden bevorzugt so gewählt, daß bei der Polymerisationstemperatur während einer möglichen Zulaufphase ein möglichst konstantes Radikalangebot vorliegt. Bevorzugt eingesetzte Initiatoren für die Polymerisation sind: Dialkylperoxide, wie Di-tert.-Butylperoxid, Dicumylperoxid, Hydroperoxide, wie Cumolhydroperoxid, tert.-Butylhydroperoxid, Perester, wie tert.-Butylperbenzoat, tert.-8utyl-per-3,4,4-trimethylhexanoat, tert.-Butyl-per-2-ethyl-hexanoat. Die Polymerisationsinitiatoren, insbesondere Di- tert.-butylperoxid und tert.-Butylperbenzoat werden bevorzugt in einer Menge von 0,1 bis 2,0 Gew.-%, bezogen auf die Monomereneinwaage zugesetzt. Zur Regelung des Molekulargewichts können übliche Kettenüberträger mitverwendet werden. Beispiele sind Mercaptane, Thioglykolsäureester, Chlorkohlenwasserstoffe.

Bevorzugt werden die Monomere im Mengenverhältnis 4 - 20 Gew.-% Glycidylester von in alpha-Stellung verzweigten aliphatischen gesättigten Monocarbonsäuren (a1) und/oder Ester von in alpha-Stellung verzweigten aliphatischen gesättigten Monocarbonsäuren mit ungesättigten Alkoholen (a2), 20 - 70 Gew.-% Alkylester ethylenisch ungesättigter Carbonsäuren (b), 10 - 60 Gew.-% Hydroxyalkylester ethylenischungesättigter Carbonsäuren (c), bis zu 20 Gew.-%, z.B. 9 - 20 Gew.-% ethylenisch ungesättigte Carbonsäuren (d) und 0 - 30 Gew-% weitere Vinylmonomere (e) eingesetzt, wobei sich die Summe der Zahlenwerte der einzelnen Komponenten jeweils auf 100 % ergänzt.

Die Polymerisationsbedingungen werden bevorzugt so eingestellt, daß die hergestellten Copolymerisate ein Gewichtsmittel der Molmasse (Mw) von 2000 bis 10000 aufweisen. Die Hydroxylzahl des Copolymerisates liegt bevorzugt bei 80 - 200 mg KOH/g, besonders bevorzugt bei 100 -150 mg KOH/g, und die Säurezahl bevorzugt bei 5 - 100 mg KOH/g, bevorzugt 20-50 mg KOH/g. Als Lösemittel können übliche inerte Lösungsmittel für die Lösungspolymerisation eingesetzt werden. Bevorzugt eignen sich solche organischen Lösungsmittel, die dann auch später in den fertigen Überzugsmitteln eingesetzt werden. Beispiele hierfür sind Ester, wie Butylacetat, Isobtuylacetat; Ketone, wie Methylethylketon, Diisobutylketon, Cyclohexanon, Isophoron; aromatische Kohlenwasserstoffe, wie Xylol, Solvesso 100 (eingetragenes Warenzeichen für aromatische Kohlenwasserstoffgemische) und aliphatische Kohlenwasserstoffe können ebenfalls eingesetzt werden.

Zusätzlich zu den vorstehend beschriebenen hydroxylgruppenhaltigen Copolymerisaten kann das Bindemittel noch weitere hydroxyfunktionelle Harze enthalten. Von solchen zusätzlichen Harzen werden bevorzugt weniger als 15 Gew.-%, besonders bevorzugt weniger als 10 Gew.-%, bezogen auf das Gesamtgewicht der Komponente A), zugesetzt. Einsetzbar sind z.B. Polyester mit einem Zahlenmittel der Molmasse (Mn) 500 - 10000 und/oder Polyurethanharze mit einem Mn 1000 - 100000. Enthalten die zusätzlichen Harze ebenfalls Hydroxylgruppen, müssen diese bei der Einstellung des Vernetzungsverhältnisses OH : NCO mit berücksichtigt werden.

Bei der Polyisocyanatkomponente B) handelt es sich um beliebige zwei-oder mehrwertige organische Polyisocyanate mit aliphatisch, cycloaliphatisch, araliphatisch und/oder aromatisch gebundenen, freien Isocyantgruppen, die bei Raumtemperatur flüssig sind. Die Polyisocyanatkomponente B) weist bevorzugt eine Viskosität von 1 bis 6000 mPas, vorzugsweise über 5 und unter 3000 mPas bei 23°C auf. Bevorzugt handelt es sich bei der Polyisocyantkomponente um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Als Polyisocyanatkomponente gut geeignet sind beispielsweise übliche Lackpolyisocyanate auf Basis von Hexamethylendiisocyanat, 1-Isocyanato-3,3,5-trimethyl-5-isocyanatomethyl-cyclohexan (IPDI) und/oder Bis(isocy-anato-cyclohexyl)-methan und die an sich bekannten Biuret-, Urethandion-und/oder Isocyanuratgruppen aufweisenden Derivate dieser Diisocyanate, die im Anschluß an ihre Herstellung, vorzugsweise durch Destillation von überschüssigem Ausgangsdiisocyanat bis auf einen Restgehalt von weniger als 0,5 Gew.-% befreit worden sind. Hierzu gehören z.B. Biuretgruppen aufweisende Polyisocyanate auf Basis von Hexamethylendiisocyanat, die aus Gemischen von N,N',N"-Tris(6-isocyanatohexyl)-biuret mit untergeordneten Mengen seiner höheren Homologen, sowie die cyclischen Trimerisate von Hexamethylendiisocyanat, die im wesentlichen aus N,N',N"-Tris-(6-isocyanatohexyl)-isocyanurat im Gemisch mit untergeordneten Mengen von seinen höheren Homologen bestehen. Insbesondere bevorzugt werden Gemische aus Uretdion- und/oder Hexamethylendiisocyanat, wie sie durch katalytische Oligomerisierung von Hexamethylendiisocyanat unter Verwendung von Trialkylphosphinen entstehen.

Gut geeignet sind ebenfalls sterisch gehinderte Polyisocyanate, die in alpha-Stellung zu den Isocyanatgruppen eine oder zwei lineare, verzweigte oder cyclische Alkylsubstituenten aufweisen. Beispiele hierfür sind 1,1,6,6-Tetramethyl-hexamethylendiisocyanat, 1,5-Dibutyl-pentamethylendiisocyanat, p- oder m-Tetramethylen-xylylendiisocyanat und der entsprechenden hydrierten Homologen. Diese Diisocyanate können ebenfalls in geeigneter Weise zu höherfunktionellen Verbindungen umgesetzt werden, beispielsweise durch Trimerisierung oder durch Umsetzung mit Trimethylolpropan.

Bei den erfindungsgemäß geeigneten, jedoch weniger bevorzugten aromatischen Polyisocyanaten handelt es sich insbesondere um übliche sogenannte "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der als Beispiele genannten monomeren Diisocyanate, das heißt die entsprechenden Isocyanato-isocyanurate, die ebenfalls im Anschluß an ihre Herstellung vorzugsweise destillativ von ihren Ausgangsverbindungen befreit wurden.

Die Polyisocyanate können auch in Form Isocyanat-modifizierter Harze verwendet werden. Für den Einbau in harzähnliche Grundkörper werden z.B. Isocyanatverbindungen verwendet, die zwei unterschiedlich reaktive NCO-Gruppen enthalten wie beispielsweise m- oder p-Dimethyloluylen-diisocyanat (oder 2-Isocyanato-2-(4-isocyanatophenyl)-propan) oder die neben einer sterisch gehinderten Isocyanatgruppe noch eine radikalisch polymerisierbare Doppelbindung enthalten wie beispielsweise m- oder p-Isopropenyl-dimethylbenzylisocyanat. Mit Hilfe dieser reaktiven Bausteine können entweder durch Umsetzung von OH-Gruppen von Polyestern oder Polyurethanen mit einer der Isocyanatgruppen, insbesondere mit der reaktiveren NCO-Gruppe oder durch Einpolymerisieren der Doppelbindung in geeignete Polymerisatharze isocyanatgruppenhaltige Vernetzer mit einer höheren Molmasse und Funktionalität hergestellt werden.

Die Polyisocyanatkomponente kann auch aus Mischungen der als Beispiele genannten Di- und Polyisocyanate bestehen.

Aus dem hydroxylgruppenhaltigen Copolymerisat A) und dem Polyisocyant B) werden Überzugsmittel hergestellt. Dabei wird so vorgegangen, daß das Äquivalentverhältnis OH : NCO 1 : 1,6 bis 1 : 2,2, bevorzugt 1 : 1,7 bis 1 : 2,0 beträgt.

Bevorzugt werden transparente, pigmentfreie Überzugsmittel (Klarlacke) hergestellt. Die fertigen Klarlacke können die aus der Polyurethanlacktechnologie üblichen bekannten Hilfsstoffe und Zusatzstoffe als Additive enthalten. Das sind z.B. Verlaufsmittel auf Basis von Celluloseestern, Oligoalkylacrylaten und Silikonölen, farblose Pigmente, viskositäts- und rheologiebeeinflussende Zusätze, Mattierungs- und Antischaummittel, UV-Absorber und Lichtschutzmittel. Daneben enthält der Klarlack zur Einstellung der Spritzviskosität Lösemittel, wie sie z.B. vorstehend bei der Herstellung der Komponente A) definiert wurden, z.B. Butylacetat, Glykoletherester, wie Methoxypropylacetat, aromatische Kohlenwasserstoffe, wie z.B. Xylol, Solvesso, Ketone, wie Methylethylketon oder Cyclohexanon.

Gegebenenfalls kann auch ein Vernetzungskatalysator für die Urethanbildung enthalten sein. Bevorzugt werden hierbei Amine, z.B. Dimethylethanolamin verwendet. Weitere geeignete Katalysatoren sind Zinn- und Zinkorganische Verbindungen sowie andere Schwermetallbeschleuniger.

Die Additive und Hilfsstoffe werden in üblichen, dem Fachmann geläufigen Mengen, je nach gewünschtem Effekt zugesetzt. Sie sind in einer der Komponenten dispergiert bzw. gelöst. Dabei sollen keine Reaktionen zwischen den einzelnen Bestandteilen auftreten.

Zur Herstellung des applikationsfertigen Überzugsmittels werden die Komponenten des Überzugsmittels in den gewünschten Anteilen miteinander gemischt und gegebenenfalls die Viskosität eingestellt.

Das Überzugsmittel kann als Klarlack wie in der Mehrschichtlackierung üblich z.B. naß-in-naß auf Wasserbasislack nach kurzem Ablüften oder Trocknen appliziert werden. Das Überzugsmittel kann durch übliche Techniken, wie Tauchen, Spritzen, Rollen, Rakeln, Streichen auf die zu lackierende Oberfläche aufgetragen werden. Die organischen Lösemittel verdunsten während oder nach dem Auftrag auf das Substrat.

Die Aushärtung erfolgt bevorzugt bei 10 - 80°C, besonders bevorzugt bei Raumtempteratur bis 60°C. Die Härtungszeit ist unter anderem abhängig von der Temperatur und dem gegebenenfalls eingesetzten Katalysator. Sie kann z.B. von wenigen Minuten bis zu 30 Tagen betragen. Ist sie zu lang, kann sie durch Erhöhung der Temperatur verkürzt werden. Gegebenenfalls wird auch der Verlauf durch die erhöhte Temperatur begünstigt. Die Aushärtung kann auch durch IR-Trocknung beschleunigt werden.

Die Überzugsmittel werden als Klarlacke formuliert und zur Überlackierung von Basislacken auf wäßriger Basis, insbesondere naß-in-naß, verwendet. Bei den einsetzbaren Wasserbasislacken handelt es sich um an sich bekannte metallic-, perlmutt- oder unifarbene Wasserbasislacke auf z.B. Polyurethan-, Polyester- und/oder Polyacrylatbasis. Vorzugsweise werden solche auf Polyurethanbasis eingesetzt. Bevorzugte Polyurethan-Metallic-Basislacke enthalten 8 - 30 Gew.-% eines Bindemittels oder Bindemittelgemisches basierend auf einem oder mehreren Carbonatgruppierungen enthaltenden Polyurethanen mit einem Zahlenmittel der Molmasse (Mn) von 70000-500000 und gegebenenfalls weiteren Polyurethanen mit Mn 20000 - 60000. Die Polyurethane mit Mn 70000 bis 500000 können z.B. zu 50 - 90 Gew.-% und die Polyurethane mit Mn 20000 - 60000 zu 10 - 50 Gew.-%, jeweils in Form wäßriger Dispersionen, enthalten sein. Derartige Polyurethane, ihre Herstellung und Verwendung in Wasserbasislacken sind in der DE-A-41 15 042 ausführlich beschrieben.

Zur Herstellung der unifarbenen Überzüge werden insbesondere 5 - 30 Gew.-% eines Bindemittels bzw. Bindemittelgemisches auf Basis eines oder mehrerer Carbonatgruppierungen enthaltender Polyurethane mit einer Glasübergangstemperatur kleiner 0°C und ungesättigter Reaktionsprodukte von carboxyfunktionellen Polykondensaten mit ethylenisch ungesättigten Monomeren mit einer Glasübergangstemperatur größer 0°C eingesetzt. Beispielsweise können die Polyurethane mit der Glasübergangstemperatur kleiner 0°C zu 50 - 90 Gew.-% und die Polyurethane mit der Glasübergangstemperatur größer 0°C zu 10 - 50 Gew.-%, jeweils in Form der wäßrigen Dispersionen, enthalten sein. Dabei beziehen sich die Gew.-% auf den Bindemittelfestkörper und addieren sich zu 100 %. Derartige Polyurethane, ihre Herstellung und Verwendung in Wasserbasislacken sind in der DE-A-41 15 042 der gleichen Anmelderin ausführlich beschrieben.

Weitere für die genannten Wasserbasislacke gut einsetzbare Bindemittel auf wäßriger Basis sind beispielsweise Gemische aus
A) 5 bis 50 Gew.-% eines oder mehrerer, Carbonatgruppierungen enthaltender Polyurethane mit einem Zahlenmittel der Molmasse (Mn) von 70000 - 500000, in Form einer wäßrigen Dispersion, erhältlich durch Umsetzung von
   a) 10 bis 40 Gew.-% eines oder mehrerer organischer Polyisocyanate, die keine hydrophilen oder in hydrophile Gruppen überführbare Gruppen aufweisen,
   b) 40 bis 80 Gew.-% einer oder mehrerer höhermolekularer organischer Polyhydroxyverbindungen, die keine hydrophilen oder in hydrophile Gruppen überführbare Gruppen aufweisen, und die zumindest zu 50 Gew.-% aus einem oder mehreren Polyhydroxypolycarbonaten bestehen,
   c) 0,2 bis 18 Gew.-% einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,
   d) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen, und
   e) 0 bis 8 Gew.-% einer oder mehrerer nicht-ionisch hydrophiler Verbindungen, die mindestens eine Isocyanatgruppe oder mindestens eine gegenüber Isocyanatgruppen reaktionsfähige Gruppe aufweisen, und
B) 50 bis 95 Gew.-% eines oder mehrerer Polyurethane mit einem Zahlenmittel der Molmasse (Mn) von 30000 bis 500000, in Form einer wäßrigen Dispersion,
   erhältlich durch radikalisch initiierte Polymerisation von einem oder mehreren Polyurethan-Makromonomeren mit einem Gehalt an Carboxyl-, Phosphonsäure- und/oder Sulfonsäuregruppen und lateralen Vinylgruppen, in Gegenwart eines oder mehrerer mit dem Polyurethan-Makromonomer copolymerisierbaren ungesättigten Monomeren,
wobei sich die Gew.-% der Komponenten A) und B) jeweils auf den Bindemittelfestkörper beziehen und auf 100 Gew.-% addieren. Solche Bindemittel sind beispielsweise in der DE-A-43 39 085 beschrieben.

Als wasserverdünnbare Bindemittel für die genannten Wasserbasislacke ebenfalls gut geeignet sind beispielsweise auch Gemische, wie sie in der DE-A-43 44 063 beschrieben werden. Sie bestehen aus:
A) 45 bis 95 Gew.-% eines oder mehrerer Polyurethane, erhältlich durch radikalisch initiierte Polymerisation von Polyurethan-Makromonomeren mit einem Gehalt an Carboxyl-, Phosphon- und/oder Sulfonsäuregruppen und lateralen Vinylgruppen sowie gegebenenfalls terminalen Vinyl-, Hydroxy-, Urethan-, Thiourethan- und/oder Harnstoffgruppen in Gegenwart von einem oder mehreren mit dem Polyurethanmakromonomer copolymerisierbaren ungesättigten Monomeren, in Form einer wäßrigen Dispersion und
B) 5 bis 55 Gew.-% eines oder mehrerer harnstoffgruppenfreier und carbonatgruppenfreier ionische Gruppen enthaltender Polyurethanharze mit einem Zahlenmittel der Molmasse (Mn) von 10000 bis 300000 und einer Säurezahl von 5 bis 50 in Form einer wäßrigen Dispersion, erhältlich durch Bereitung eines OH-Gruppen enthaltenden Polyurethan-Prepolymeren mit einer OH-Zahl von 5 bis 75 und einem Zahlenmittel der Molmasse (Mn) von 5000 bis 50000, durch Umsetzung in organischem Medium von
   a) einer oder mehreren mit Isocyanat reaktiven Verbindungen mit einer Säurezahl von 0 bis 10, in Form von
      a1) 70 bis 100 Gew.-% eines oder mehrerer Polyesterpolyole und/-oder Polyetherpolyole, insbesondere Polyesterdiole und/oder Polyetherdiole mit einem Molekulargewicht von 500 bis 6000, zusammen mit
      a2) 30 bis 0 Gew.-% einer oder mehrerer von al) unterschiedlicher Verbindungen mit mindestens zwei mit Isocyanat reaktiven Gruppen, mit einem Molekulargewicht von 60 bis 400, mit
   b) einem oder mehreren, freie Isocyanatgruppen enthaltenden Reaktionsprodukten aus
      b1) mindestens einer Verbindung mit zwei mit Isocyanaten reaktiven Gruppen und mindestens einer anionischen oder zur Anionenbildung befähigten Gruppe und
      b2) einem oder mehreren organischen Diisocyanaten
in einem derartigen Mengenverhältnis, daß das molare Verhältnis der mit Isocyanat reaktiven Gruppen von b1) zu den Isocyanatgruppen von b2) 1 : 1,5 bis 1 : 2,5 beträgt, wobei das Reaktionsprodukt b) in Anwesenheit der Komponente a) hergestellt werden kann, wobei die Komponente b) in einer derartigen Menge eingesetzt wird, daß die fertigen Polyurethanharze die gewünschte Säurezahl aufweisen, sowie mit
c) einem oder mehreren Polyisocyanaten mit mindestens zwei freien Isocyanatgruppen pro Molekül, in einer derartigen Menge, daß das molare Verhältnis der OH-Gruppen der Komponente a) zu den NCO-Gruppen der Komponenten b) und c) 1,01 : 1 bis 3 : 1 beträgt, worauf das aus a), b) und c) erhaltende Prepolymere vor oder nach der teilweisen oder vollständigen Neutralisation vorhandener in ionische Gruppen überführbarer Gruppen in dem organischen Medium oder nach Überführung in die Wasserphase einer Kettenverlängerung unterzogen wird durch Umsetzung mit
d) einem oder mehreren polyfunktionellen Isocyanaten mit einer Funktionalität an freien NCO-Gruppen von mindestens 1,8, in derartigen Anteilen, daß die fertigen Polyurethanharze das gewünschte Zahlenmittel der Molmasse aufweisen, wobei sich die Gew.-% der Komponenten A) und B) jeweils auf den Harzfestkörper beziehen.

Die uni- oder metallicfarbenen Wasserbasislack-Überzugsmittel auf Basis der vorstehend beschriebenen Polyurethanharze enthalten beispielsweise neben dem Bindemittelanteil von 8 - 30 Gew.-% 50 - 85 Gew.-% Wasser, 1-20 Gew.-% eines oder mehrerer Lösemittel z.B. Alkohole, wie Butanol, Glykolether, wie Butylglykol, aromatische Kohlenwasserstoffe, wie Solvesso, Methoxypropylacetat und 0,3 - 25 Gew.-% Pigmente.

Bei den Pigmenten kann es sich um deckende, transparente oder effektgebende Pigmente handeln. Zur Formulierung eines Metallic-Basislackes sind bevorzugt 0,3 - 4 Gew.-% eines oder mehrerer Metallpigmente und 0 - 10 Gew.-% eines oder mehrerer färbender oder effektgebender Pigmente enthalten. Zur Formulierung von Uni-Basislacken sind bevorzugt 5 - 20 Gew.-% an Pigmenten enthalten.

Die Wasserbasislacke enthalten Neutralisationsmittel zur teilweisen Neutralisation von neutralisierbaren Gruppen. Der Neutralisationsgrad neutralisierbarer Gruppen beträgt bevorzugt 40 - 120 % der neutralisierbaren Gruppen und liegt insbesondere unter 100 %. Als Neutralisationsmittel kommen auf dem Lacksektor übliche Basen wie Ammoniak, Alkanolamine, wie N,N-Dimethylethanolamin oder tert. Amine, wie Triethylamin, Triethanolamin, N-Methylmorpholin in Frage.

Die Wasserbasislacke enthalten weiterhin gegebenenfalls übliche Additive und Hilfsstoffe, wie sie auf dem Lacksektor eingesetzt werden. Derartige Hilfsmittel und Additive sind z.B. Verdicker, die Rheologie beeinflussende Zusätze, Antischaummittel, Korrosionsinhibitoren (beispielsweise zur Inhibierung der Gasung von Metallpigmenten). Die Additive und Hilfsstoffe werden in üblichen, dem Fachmann geläufigen Mengen zugesetzt.

Bei der erfindungsgemäßen Applikation des erfindungsgemäßen Überzugsmittels auf den bekannten Wasserbasislacken werden Mehrschichtlackierungen mit sehr guter Härte und ausgezeichnetem Glanz erzielt. Ein Vergleich mit üblichem Klarlack mit einem Vernetzungsverhältnis OH : NCO von 1 : 1 ergab eine sehr ungenügende Härte und Glanzeinbußen. Überraschend wurde festgestellt, daß trotz Übervernetzung keine Verschlechterung der Wetterstabilität zu beobachten war. Es werden vergleichbare gute Ergebnisse im Gesamtaufbau wie mit konventionellen, lösemittelhaltigen Basislacken erreicht.

Das erfindungsgemäße Verfahren findet z.B. Anwendung in der Industrie-und Fahrzeuglackierung für Metalle und Kunststoffe. Bevorzugt wird es in der Fahrzeugreparaturlackierung und der Erstlackierung von Fahrzeugen oder Fahrzeugteilen, insbesondere von Nutzfahrzeugen, bei Raumtemperatur bzw. forcierter Trocknung, angewendet.

Die Erfindung soll in den nachfolgenden Beispielen und Vergleichsbeispielen näher erläutert werden.

### Beispiel 1

### Herstellung des hydroxylgruppenhaltigen Copolymerisates

In einem 2-Liter Dreihals-Schliffkolben, der mit einem Rührwerk, Kontaktthermometer, Kugelkühler und Tropftrichter ausgerüstet ist, werden 750 eines Gemischs aromatischer Kohlenwasserstoffe (eingetragenes Warenzeichen Solvesso 100) und 175 g eines handelsüblichen Vinylesters (eingetragenes Warenzeichen Veova 10) vorgelegt und unter Rühren bei eingeschalteter Rückflußkühlung auf 147°C aufgeheizt. Innerhalb von 5 Stunden wird das Monomeren/Initiatorgemisch aus 50 g Acrylsäure, 105 g Butylmethacrylat, 250 g Isobutylmethacrylat, 425 g tert.-Butylacrylat, 550 g Hydroxypropylmethacrylat und 70 g Di-tert.-Butylperoxid kontinuierlich aus dem Tropftrichter zudosiert. Nach Zulaufende wird der Tropftrichter mit 125 g Solvesso 100 nachgespült und dieses zum Reaktionsgut hinzugefügt. Anschließend wird der Ansatz 6 Stunden bei 143°C nachpolymerisiert, so daß die Umsetzung zu mehr als 99 % erfolgt ist.

Das Copolymerisat weist einen Festkörper von 67 %, eine Säurezahl von 31 mg KOH/g, eine OH-Zahl von 132 mg KOH/g und eine Viskosität von 4110 mPa.s, gemessen bei 25°C, auf.

### Beispiel 2

### Herstellung eines Klarlackes

Aus den in Beispiel 1 beschriebenen hydroxylgruppenhaltigen Copolymerisaten werden Klarlacke mit folgenden Bestandteilen hergestellt:
55 Gew.-% hydroxylgruppenhaltiges Copolymerisat
34 Gew.-% Butylacetat
10 Gew.-% eines Gemischs aromatischer Kohlenwasserstoffe (eingetra- genes Warenzeichen Solvesso 100)
1 Gew.-% Lichtschutzmittel
0,005 Gew.-% Dibutylzinndilaurat-Lösung 10 %ig

Es resultiert ein Klarlack mit einem Festkörpergehalt von 55 % und einer Viskosität von ca. 90 s (DIN-Becher 4 mm-Düse, 23°C).

Anschließend wird ein Polyisocyanat-Härter durch Vermischen folgender Bestandteile zubereitet:
35 Gew.-Teile eines handelsüblichen Polyisocyanats (eingetragenes Warenzeichen Desmodur 3390)
53 Gew.-Teile Butylacetat
7 Gew.-Teile Methoxypropylacetat
5 Gew.-Teile eines Gemischs aromatischer Kohlenwasserstoffe, eingetragenes Warenzeichen Solvesso 100

Die beiden Komponenten werden kurz vor der Verarbeitung in einem solchen Verhältnis miteinander vermischt, daß das Äquivalentverhältnis NCO : OH 2 : 1 beträgt.

### Beispiel 3

### Herstellung eines Klarlackes

Es wird analog Beispiel 2 verfahren. Die hydroxylgruppenhaltige und die Polyisocyanat-Komponente werden jedoch abweichend von Beispiel 2 im Äquivalentverhältnis NCO : OH = 1,7 : 1 miteinander gemischt.

### Vergleichsversuch

Es wird analog Beispiel 2 verfahren. Die hydroxylgruppenhaltige und die Polyisocyanat-Komponente werden jedoch im Äquivalentverhältnis NCO : OH 1 : 1 miteinander vermischt.

### Beispiel 4

Metallic-Wasserbasislacke auf Polyurethanbasis (Herstellung der wäßrigen Polyurethandispersionen wie in DE-A-41 15 015, Herstellungsbeispiel 1 und Herstellung von Metallic-Wasserbasislacken, Herstellungsbeispiel 3 beschrieben) werden auf blankgeschliffene Karosseriebleche mit praxisüblicher 2K-Epoxi-Haftgrundierung und praxisüblichem 2K-Polyurethan-Füller appliziert. Es können auch wasserbasierende Grundierungen und Füller eingesetzt werden. (2K = Zweikomponenten).

### Vergleichsversuch (Vergleichsapplikation)

Übliche konventionelle Basislacke auf Celluloseacetobutyrat Acrylat-Basis werden analog Beispiel 4 appliziert. Nach 15-minütiger Vortrocknung wird der im Vergleichsversuch hergestellte Klarlack appliziert. Nach 10-minütigem Ablüften bei Raumtemperatur wird 45 min. bei 60°C getrocknet.

Nach 20 - 40 minütiger Vortrocknung bei Raumtemperatur werden jeweils die in den Beispielen 2 und 3 und im Vergleichsversuch hergestellten Klarlacke appliziert. Nach 10 minütigem Ablüften bei Raumtemperatur wird 45 min. bei 60°C getrocknet.

Die Eigenschaften der erhaltenen Lackierungen bezüglich Glanz, Härte und Wetterstabilität sind in der folgenden Tabelle dargestellt.

| Schichtdicke: 30 - 40 µm | | | | | |
|---|---|---|---|---|---|
| Basislack | Klarlack-Vernetzungsstöchiometrie OH : NCO | Kratzbeständigkeit | Oberflächenglätte | Wasserbeständigkeit ¹⁾ Anquellen Blasenbildung ²⁾ | |
| | | | | Menge/Größe | |
| Lösemittelbasierend Vergleich | 1 : 1 | 1 | 1 | 1 | 0/0 |
| | | | | | |
| Wasserverd. Vergleich | 1 : 1 | 3 | 3 | 2-3 | 2/2 |
| | | | | | |
| Wasserverd. Beispiel 3 | 1 : 1,7 | 2 | 2 | 2 | 1/1 |
| | | | | | |
| Wasserverd. Beispiel 2 | 1 : 2 | 1 - 2 | 1 | 1-2 | 0/0 |

| | | | | | |
|---|---|---|---|---|---|
| 1) Feucht/Warm-Test nach DIN 50017 KK | | | | | |
| 2) Nach DIN 53209 Bewertungen: 1 = sehr gut 2 = gut 3 = bedingt brauchbar 4 = unbrauchbar | | | | | |

Aus der Vergleichsdarstellung geht hervor, daß mit dem erfindungsgemäßen Verfahren im Mehrschichtaufbau auf Wasserbasislack etwa gleich gute Ergebnisse wie auf herkömmlichen konventionellen Basislacken erzielt werden. Insbesondere bei höheren Schichtdicken des Wasserbasislacks (30-40 µm) werden gute Resultate hinsichtlich Härte und Wasserbeständigkeit erreicht.

## Patentansprüche

1. Verfahren zur Mehrschichtlackierung eines Substrats durch Aufbringen einer Basislackschicht aus einem wäßrigen Überzugsmittel auf das gegebenenfalls vorbeschichtete Substrat und anschließendes Überlackieren mit einem Klarlack, dadurch gekennzeichnet, daß man einen Klarlack verwendet, der enthält:
A) mindestens ein hydroxylgruppenhaltiges Copolymerisat, das erhältlich ist durch Umsetzung von
a) einem oder mehreren Estern von in alpha-Stellung verzweigten aliphatischen gesättigten Monocarbonsäuren mit einer oder mehreren Epoxidgruppen oder ethylenischen Doppelbindungen im Alkoholteil, mit
b) einem oder mehreren Alkylestern alpha,beta-ethylenisch ungesättigter Carbonsäuren,
c) einem oder mehreren Hydroxyalkylestern alpha,beta-ethylenisch ungesättigter Carbonsäuren,
B) ein oder mehrere Polyisocyanate mit im Durchschnitt mindestens 1,5 NCO-Gruppen im Molekül, in einer solchen Menge, daß das Äquivalentverhältnis der OH-Gruppen der Komponenten A) zu den NCO-Gruppen der Komponenten B) 1 : 1,6 bis 1 : 2,2 beträgt,
C) ein oder mehrere Lösemittel, sowie gegebenenfalls ein oder mehrere lackübliche Additive.

2. Verfahren nach Anspruch 1, dadurch gekennzeichnet, daß das hydroxylgruppenhaltige Copolymerisat A) erhältlich ist durch Umsetzung von a), b), c) und einer oder mehreren alpha,beta-ethylenisch ungesättigten Carbonsäuren d).

3. Verfahren nach Anspruch 1 oder 2, dadurch gekennzeichnet, daß das hydroxylgruppenhaltige Copolymerisat A) erhältlich ist durch Umsetzung von a), b), c) gegebenenfalls d) und einem oder mehreren von a), b), c) und d) unterschiedlichen Vinylmonomeren e).

4. Verfahren nach Anspruch 1, 2 oder 3, dadurch gekennzeichnet, daß man den wäßrigen Basislack auf das gegebenenfalls vorbeschichtete Substrat aufbringt und auf die erhaltene Basislackschicht gegebenenfalls nach Ablüften naß-in-naß den Klarlack aufbringt und die erhaltenen Schichten anschließend gemeinsam härtet.

5. Verfahren nach einem der Ansprüche 1 bis 4, dadurch gekennzeichnet, daß man einen Klarlack verwendet, worin die Komponente A) und die Komponente B) in einer solchen Menge erhalten sind, daß das Äquivalentverhältnis der OH-Gruppen zu den NCO-Gruppen 1 : 1,7 bis 1 : 2,0 beträgt.

6. Verfahren nach einem der Ansprüche 1 bis 5, dadurch gekennzeichnet, daß man einen Klarlack verwendet, worin bei der Herstellung der Komponente A) die Monomeren a) in einer Menge von 4 bis 20 Gew.-% der gesamten die Komponenten A) bildenden Monomeren verwendet wird.

7. Verfahren nach einem der Ansprüche 1 bis 6, dadurch gekennzeichnet, daß man einen Klarlack verwendet, worin die Monomerkomponente Aa) einen oder mehrere Glycidylester von in alpha-Stellung verzweigten aliphatischen gesättigten Monocarbonsäuren enthält.

8. Verfahren nach einem der Ansprüche 1 bis 6, dadurch gekennzeichnet, daß man einen Klarlack verwendet, worin die Monomerkomponente Aa) einen oder niehrere Vinylester von in alpha-Stellung verzweigten aliphatischen gesättigten Monocarbonsäuren enthält.

9. Verfahren nach einem der Ansprüche 6 bis 8, dadurch gekennzeichnet, daß ein Klarlack verwendet wird, worin bei der Herstellung der Komponente A) die Monomeren b) in einer Menge von 20 bis 70 Gew.-%, die Monomeren der Komponente c) in einer Menge von 10 bis 60 Gew.-%, die Monomeren der Komponente d) in einer Menge bis zu 20 Gew.-% und die Monomeren der Komponente e) in einer Menge bis zu 30 Gew.-%, bezogen auf das Gewicht der gesamten, die Komponente A) bildenden Monomeren verwendet werden.

10. Verfahren nach Anspruch 6, dadurch gekennzeichnet, daß ein Klarlack verwendet wird, worin die Komponente a) Vinylester von in alpha-Stellung verzweigten aliphatischen gesättigten Monocarbonsäuren mit 5 - 20 C-Atomen im Molekül sind.

11. Verfahren nach einem der vorhergehenden Ansprüche, dadurch gekennzeichnet, daß man einen Klarlack verwendet, worin die Komponente b) Acrylsäureester oder Acrylsäure- und Methacrylsäureester mit gerad-oder verzweigtkettigen Alkoholresten sind.

12. Verfahren nach Anspruch 11, dadurch gekennzeichnet, daß man einen Klarlack verwendet, worin die Komponente b) Acrylsäureester oder Acrylsäure- und Methacrylsäureester mit 2 - 8 C-Atomen im Alkoholrest sind.

13. Verfahren nach einem der vorhergehenden Ansprüche, dadurch gekennzeichnet, daß man einen Klarlack verwendet, worin die Komponente c) Hydroxyalkylester der Acrylsäure oder Acryl- und Methacrylsäure sind.

14. Verfahren nach einem der vorhergehenden Ansprüche, dadurch gekennzeichnet, daß man einen Klarlack verwendet, worin die Komponente c) Hydroxyalkylester der Acrylsäure oder Acryl- und Methacrylsäure mit 2 - 8 C-Atomen im Hydroxyalkylrest sind.

15. Verfahren nach einem der vorhergehenden Ansprüche, dadurch gekennzeichnet, daß man einen Klariack verwendet, worin es sich bei Komponente d) um Acrylsäure oder Methacrylsäure handelt.

16. Verfahren nach einem der vorhergehenden Ansprüche, dadurch gekennzeichnet, daß man einen Klarlack verwendet, worin es sich bei Komponente e) um monovinylaromatische Verbindungen mit 8 - 9 C-Atomen je Molekül handelt.

17. Verfahren nach einem der vorhergehenden Ansprüche, dadurch gekennzeichnet, daß man einen Klarlack verwendet, worin das hydroxylgruppenhaltige Copolymerisat eine OH-Zahl vo 80 - 200 mg KOH/g und eine Säurezahl von 5 - 80 mg KOH/g aufweist.

18. Verfahren nach einem der vorhergehenden Ansprüche, dadurch gekennzeichnet, daß man einen Klarlack verwendet, worin das hydroxylgruppenhaltige Copolymerisat ein Gewichtsmittel der Molmasse (Mw) von 2000 - 10000 aufweist.

19. Verfahren nach einem der vorhergehenden Ansprüche, dadurch gekennzeichnet, daß man einen Klarlack verwendet, worin es sich bei den Polyisocyanaten B) um Polyisocyanate auf aliphatischer Basis handelt.

20. Verfahren nach einem der vorhergehenden Ansprüche, dadurch gekennzeichnet, daß man einen Klarlack verwendet, worin es sich bei den Polyisocyanaten B) um sterisch gehinderte Polyisocyanate handelt.

21. Verfahren nach einem der vorhergehenden Ansprüche, dadurch gekennzeichnet, daß man einen Wasserbasislack auf der Basis von Polyurethanharzen, Polyesterharzen oder Polyacrylaten verwendet.

22. Verfahren nach einem der Ansprüche 1 bis 21, dadurch gekennzeichnet, daß man einen Wasserbasislack, enthaltend ein Bindemittel auf der Basis von 50 - 90 Gew.-% eines oder mehrerer Carbonatgruppierungen enthaltender Polyurethane mit einem Zahlenmittel der Molmasse (Mn) von 70000 bis 500000, in Form einer wäßrigen Dispersion, und 10 bis 50 Gew.-% eines oder mehrerer Polyurethane mit einem Zahlenmittel der Molmasse (Mn) von 20000 bis 60000, in Form einer wäßrigen Dispersion verwendet.

23. Verfahren nach einem der Ansprüche 1 und 22, dadurch gekennzeichnet, daß man einen Wasserbasislack, enthaltend ein Bindemittel auf der Basis von 50 - 90 Gew.-% eines oder mehrerer Carbonatgruppierungen enthaltender Polyurethane, mit einer Glasübergangstemperatur von kleiner 0°C, in Form einer wäßrigen Dispersion und 10 - 50 Gew.-% eines oder mehrerer ungesättigter Reaktionsprodukte von carboxyfunktionellen Polykondensaten und alpha,beta-olefinisch ungesättigten Monomeren mit einer Glasübergangstemperatur von größer 0°C in Form einer wäßrigen Dispersion verwendet.

24. Verwendung des Verfahrens nach einem der Ansprüche 1 bis 23 zur Lackierung von Kraftfahrzeugen.

## Claims

1. A process for the multi-layer coating of a substrate by the application of a base lacquer coat comprising an aqueous coating medium to the substrate, which is optionally pre-coated, and subsequently overcoating with a clear lacquer, characterised in that a clear lacquer is used which contains:
A) at least one copolymer which contains hydroxyl groups and which is obtainable by the reaction of
a) one or more esters of aliphatic, saturated monocarboxylic acids which are branched in the alpha position and which contain one or more epoxide groups or ethylenic double bonds in their alcohol part, with
b) one or more alkyl esters of alpha,beta-ethylenically unsaturated carboxylic acids, and
c) one or more hydroxyalkyl esters of alpha,beta-ethylenically unsaturated carboxylic acids,
B) one or more polyisocyanates containing, on average, at least 1.5 NCO groups in their molecule, in an amount such that the equivalent ratio of the OH groups of component A) to the NCO groups of component B) is 1 : 1.6 to 1 : 2.2,
C) one or more solvents, and optionally one or more customary lacquer additives.

2. A process according to claim 1, characterised in that copolymer A), which contains hydroxyl groups, is obtainable by the reaction of a), b), c) and one or more alpha,beta-ethylenically unsaturated carboxylic acids d).

3. A process according to claim 1 or 2, characterised in that copolymer A), which contains hydroxyl groups, is obtainable by the reaction of a), b), c) and optionally d), and of one or more vinyl monomers e) which are different from a), b), c) and d).

4. A process according to claim 1, 2 or 3, characterised in that the aqueous base lacquer is applied to the substrate, which is optionally pre-coated, and the clear lacquer is applied wet-into-wet, optionally after a ventilation step, to the base lacquer coat obtained, and the coats obtained are subsequently hardened jointly.

5. A process according to any one of claims 1 to 4, characterised in that a clear lacquer is used which contains component A) and component B) in an amount such that the equivalent ratio of the OH groups to the NCO groups is 1 : 1.7 to 1 : 2.0.

6. A process according to any one of claims 1 to 5, characterised in that a clear lacquer is used in which, during the production of component A), monomers a) are used in an amount of 4 to 20 % by weight of the total monomers forming component A).

7. A process according to any one of claims 1 to 6, characterised in that a clear lacquer is used in which monomer component Aa) contains one or more glycidyl esters of aliphatic, saturated monocarboxylic acids which are branched in the alpha position.

8. A process according to any one of claims 1 to 6, characterised in that a clear lacquer is used in which monomer component Aa) contains one or more vinyl esters of aliphatic, saturated monocarboxylic acids which are branched in the alpha position.

9. A process according to any one of claims 6 to 8, characterised in that a clear lacquer is used in which, during the production of component A), monomers b) are used in an amount of 20 to 70 % by weight, the monomers of component c) are used in an amount of 10 to 60 % by weight, the monomers of component d) are used in an amount of up to 20 % by weight and the monomers of component e) are used in an amount of up to 30 % by weight, with respect to the weight of the total monomers forming component A).

10. A process according to claim 6, characterised in that a clear lacquer is used in which component a) comprises vinyl esters of aliphatic, saturated monocarboxylic acids which are branched in the alpha position and which contain 5 - 20 C atoms in their molecule.

11. A process according to any one of the preceding claims, characterised in that a clear lacquer is used in which component b) comprises acrylic acid esters or acrylic acid and methacrylic acid esters containing straight chain or branched chain alcohol radicals.

12. A process according to claim 11, characterised in that a clear lacquer is used in which component b) comprises acrylic acid esters or acrylic acid and methacrylic acid esters containing 2 - 8 C atoms in their alcohol radical.

13. A process according to any one of the preceding claims, characterised in that a clear lacquer is used in which component c) comprises hydroxyalkyl esters of acrylic acid or of acrylic acid and methacrylic acid.

14. A process according to any one of the preceding claims, characterised in that a clear lacquer is used in which component c) comprises hydroxyalkyl esters of acrylic acid or of acrylic acid and methacrylic acid which contain 2 - 8 C atoms in their hydroxyalkyl radical.

15. A process according to any one of the preceding claims, characterised in that a clear lacquer is used in which component d) is acrylic acid or methacrylic acid.

16. A process according to any one of the preceding claims, characterised in that a clear lacquer is used in which component e) comprises monovinyl aromatic compounds containing 8 - 9 C atoms per molecule.

17. A process according to any one of the preceding claims, characterised in that a clear lacquer is used in which the copolymer which contains hydroxyl groups has an OH number of 80 - 200 mg KOH/g and an acid number of 5 - 80 mg KOH/g.

18. A process according to any one of the preceding claims, characterised in that a clear lacquer is used in which the copolymer which contains hydroxyl groups has a weight average molecular weight (Mw) of 2000 - 10,000.

19. A process according to any one of the preceding claims, characterised in that a clear lacquer is used in which polyisocyanates B) are polyisocyanates with an aliphatic basis.

20. A process according to any one of the preceding claims, characterised in that a clear lacquer is used in which polyisocyanates B) are sterically hindered polyisocyanates.

21. A process according to any one of the preceding claims, characterised in that an aqueous base lacquer is used which is based on polyurethane resins, polyester resins or polyacrylates.

22. A process according to any one of claims 1 to 21, characterised in that an aqueous base lacquer is used which contains a binder vehicle based on 50 - 90 % by weight of one or more polyurethanes which contain carbonyl groupings and which have a number average molecular weight (Mn) of 70,000 to 500,000, in the form of an aqueous dispersion, and 10 to 50 % by weight of one or more polyurethanes with a number average molecular weight (Mn) of 20,000 to 60,000 in the form of an aqueous dispersion.

23. A process according to either one of claims 1 and 22, characterised in that an aqueous base lacquer is used which contains a binder vehicle based on 50 - 90 % by weight of one or more polyurethanes which contain carbonyl groupings and which have a glass transition temperature less than 0°C, in the form of an aqueous dispersion, and 10 - 50 % by weight of one or more unsaturated reaction products of carboxy-functional condensation polymers and alpha,beta olefinically unsaturated monomers with a glass transition temperature greater than 0°C, in the form of an aqueous dispersion.

24. The use of the process according to any one of claims 1 to 23 for the coating of motor vehicles.

## Revendications

1. Procédé pour application d'un vernis multicouche sur un subjectile, par application d'une couche de vernis de base, constitué d'un produit de revêtement aqueux, sur le subjectile ayant éventuellement déjà reçu une couche, et application d'un vernis transparent, caractérisé en ce qu'on utilise un vernis transparent qui contient
A) au moins un copolymère contenant des groupes hydroxyle, que l'on peut obtenir par réaction
a) d'un ou plusieurs esters d'acides monocarboxyliques à insaturation aliphatique, ramifiés en position alpha, comportant un ou plusieurs groupes époxydes ou doubles liaisons éthyléniques dans la partie alcool,
b) d'un ou plusieurs esters alkyliques d'acides carboxyliques à insaturation alpha,bêta-éthylénique, et
c) d'un ou plusieurs esters hydroxyalkyliques d'acides carboxyliques à insaturation alpha, bêta-éthylénique,
B) un ou plusieurs polyisocyanates ayant en moyenne au moins 1,5 groupes NCO par molécule, en une quantité telle que le rapport entre équivalents des groupes OH du composant A) aux groupes NCO du composant B) soit de 1:1,6 à 1:2,2, et
C) un ou plusieurs solvants, et éventuellement un ou plusieurs additifs usuels dans les peintures.

2. Procédé selon la revendication 1, caractérisé en ce que le copolymère A) contenant des groupes hydroxyle peut être obtenu par réaction de a), b), c) et d'un ou plusieurs acides carboxyliques à insaturation alpha,bêta-éthylénique d).

3. Procédé selon la revendication 1 ou 2, caractérisé en ce que le copolymère A) contenant des groupes hydroxyle peut être obtenu par réaction de a), b), c) et éventuellement d), et d'un ou plusieurs monomères vinyliques e) différents de a), de b), de c) et de d).

4. Procédé selon la revendication 1, 2 ou 3, caractérisé en ce qu'on applique le vernis de base aqueux sur le substrat ayant éventuellement reçu une couche préalable, et on applique le vernis transparent, mouillé sur mouillé, sur la couche obtenue de vernis de base, éventuellement après évaporation, puis on durcit en même temps les couches obtenues.

5. Procédé selon l'une des revendications 1 à 4, caractérisé en ce qu'on utilise un vernis transparent dans lequel le composant A) et le composant B) sont présents en une quantité telle que le rapport entre équivalents des groupes OH aux groupes NCO soit de 1:1,7 à 1:2,0.

6. Procédé selon l'une des revendications 1 à 5, caractérisé en ce qu'on utilise un vernis transparent dans lequel, lors de la préparation du composant A), on utilise les monomères a) en une quantité de 4 à 20 % en poids par rapport au total des monomères formant les composants A).

7. Procédé selon l'une des revendications 1 à 6, caractérisé en ce qu'on utilise un vernis transparent dans lequel le composant monomère Aa) contient un ou plusieurs esters glycidyliques d'acides monocarboxyliques saturés aliphatiques ramifiés en position alpha.

8. Procédé selon l'une des revendications 1 à 6, caractérisé en ce qu'on utilise un vernis transparent dans lequel le composant monomère Aa) contient un ou plusieurs esters vinyliques d'acides monocarboxyliques saturés aliphatiques et ramifiés en position alpha.

9. Procédé selon l'une des revendications 6 à 8, caractérisé en ce qu'on utilise un vernis transparent dans lequel, lors de la préparation du composant A), les monomères b) sont utilisés en une quantité de 20 à 70 % en poids, les monomères du composant c) en une quantité de 10 à 60 % en poids, les monomères du composant d) en une quantité allant jusqu'à 20 % en poids et les monomères du composant e) en une quantité allant jusqu'à 30 % en poids, par rapport au poids de la totalité des monomères formant le composant A).

10. Procédé selon la revendication 6, caractérisé en ce qu'on utilise un vernis transparent dans lequel le composant a) est un ester vinylique d'acides monocarboxyliques saturés aliphatiques ramifiés en position alpha ayant de 5 à 20 atomes de carbone dans sa molécule.

11. Procédé selon l'une des revendications précédentes, caractérisé en ce qu'on utilise un vernis transparent dans lequel le composant b) est un ester de l'acide acrylique ou un ester de l'acide acrylique et de l'acide méthacrylique avec des résidus alcool à chaîne droite ou ramifiée.

12. Procédé selon la revendication 11, caractérisé en ce qu'on utilise un vernis transparent dans lequel le composant b) est un ester de l'acide acrylique ou un ester de l'acide acrylique et de l'acide méthacrylique ayant de 2 à 8 atomes de carbone dans le fragment alcool.

13. Procédé selon l'une des revendications précédentes, caractérisé en ce qu'on utilise un vernis transparent dans lequel le composant c) est un ester hydroxyalkylique de l'acide acrylique ou de l'acide acrylique et méthacrylique.

14. Procédé selon l'une des revendications précédentes, caractérisé en ce qu'on utilise un vernis transparent dans lequel le composant c) est un ester hydroxyalkylique de l'acide acrylique ou de l'acide acrylique et méthacrylique, avec de 2 à 8 atomes de carbone dans le fragment hydroxyalkyle.

15. Procédé selon l'une des revendications précédentes, caractérisé en ce qu'on utilise un vernis transparent dans lequel, pour ce qui est du composant d), il s'agit de l'acide acrylique ou de l'acide méthacrylique.

16. Procédé selon l'une des revendications précédentes, caractérisé en ce qu'on utilise un vernis transparent dans lequel, pour ce qui est du composant e), il s'agit de composés monovinylaromatiques ayant 8-9 atomes de carbone par molécule.

17. Procédé selon l'une des revendications précédentes, caractérisé en ce qu'on utilise un vernis transparent dans lequel le copolymère contenant des groupes hydroxyle a un indice d'hydroxyle de 80-200 mg KOH/g et un indice d'acide de 5-80 mg KOH/g.

18. Procédé selon l'une des revendications précédentes, caractérisé en ce qu'on utilise un vernis transparent dans lequel le copolymère contenant des groupes hydroxyle a une masse moléculaire moyenne en masse (Mw) de 2000-10 000.

19. Procédé selon l'une des revendications précédentes, caractérisé en ce qu'on utilise un vernis transparent dans lequel, pour ce qui est des polyisocyanates B), il s'agit de polyisocyanates à base aliphatique.

20. Procédé selon l'une des revendications précédentes, caractérisé en ce qu'on utilise un vernis transparent dans lequel, pour ce qui est des polyisocyanates B), il s'agit de polyisocyanates à empêchement stérique.

21. Procédé selon l'une des revendications précédentes, caractérisé en ce qu'on utilise un vernis de base à l'eau, à base de résines de polyuréthanne, de résines de polyester ou de polyacrylates.

22. Procédé selon l'une des revendications 1 à 11, caractérisé en ce qu'on utilise un vernis de base à l'eau contenant un liant à base de 50-90 % en poids d'un ou plusieurs polyuréthannes contenant des groupements carbonate, ayant une masse moléculaire moyenne en nombre (Mn) de 70 000 à 500 000, sous forme d'une dispersion aqueuse, et de 10 à 50 % en poids d'un ou plusieurs polyuréthannes ayant une masse moléculaire moyenne en nombre (Mn) de 20 000 à 60 000, sous forme d'une dispersion aqueuse.

23. Procédé selon l'une des revendications 1 à 22, caractérisé en ce qu'on utilise un vernis de base à l'eau contenant un liant à base de 50-90 % en poids d'un ou plusieurs polyuréthannes contenant des groupements carbonate, ayant une température de transition vitreuse inférieure à 0°C, sous forme d'une dispersion aqueuse, et de 10-50 % en poids d'un ou plusieurs produits insaturés de la réaction de produits de polycondensation à fonctionnalité carboxy et de monomères à insaturation alpha, bêta-oléfinique, ayant une température de transition vitreuse supérieure à 0°C, sous forme d'une dispersion aqueuse.

24. Utilisation du procédé selon l'une des revendications 1 à 23, pour le laquage des carrosseries automobiles.
